# EUROPÄISCHE PATENTSCHRIFT

(11) **EP 0 709 401 B1**
(45) Veröffentlichungstag und Bekanntmachung des Hinweises auf die Patenterteilung: **28.01.1998**
(21) Anmeldenummer: 95116033.2
(22) Anmeldetag: 11.10.1995
(51) Int. Cl.: C08F 8/22, C08F 210/12

(54) **Verfahren zur Bromierung von Alkylkautschuken**
Process for brominating of alkyl rubbers
Procédé de bromation des caoutchoucs alkyls

(30) Priorität: 24.10.1994 DE 4437931
(43) Veröffentlichungstag der Anmeldung: 01.05.1996
(73) Patentinhaber: BAYER AG, 51368 Leverkusen (DE)
(72) Erfinder: Baade, Wolfgang, Dr., D-27793 Wildeshausen (DE); Königshofen, Heinrich, Dr., D-51465 Bergisch Gladbach (DE); Kaszas, Gabor, Dr., Corunna, Ontario NON 160 (CA)

(56) Entgegenhaltungen:
- EP-A- 0 566 955
- DE-A- 2 616 994
- CHEMICAL ABSTRACTS, vol. 92, no. 14, 7.April 1980 Columbus, Ohio, US; abstract no. 111532u, SIKORSKI ET AL. 'Brominated polyisobutylene' Seite 17; & PL-A-103 458 30.August 1979

## Beschreibung

Die vorliegende Erfindung betrifft ein Verfahren zur Verbesserung der Bromierung von C₄-C₁₆-Alkylkautschuken durch Umsetzung der Alkylkautschuke mit Brom in Gegenwart von organischen Azoverbindungen und/oder Alkali- und/oder Erdalkalihypochloriten sowie in Gegenwart von Alkanen und Wasser bei Temperaturen von 10 bis 100°C.

Alkylkautschuke, insbesondere Butylkautschuk, werden heute üblicherweise in Gegenwart von Hexan als Lösungsmittel, häufig auch in Gegenwart von geringen Mengen an Wasser, bei Temperaturen von ca. 40 bis 60°C durch direkte Zumischung von flüssigem Brom bromiert. Dabei wird ein Bromatom eines Brommoleküls an den Kautschuk angelagert, während das andere Bromatom des Moleküls zu HBr umgesetzt wird. Das dabei entstehende HBr wird nach der Bromierung mit Natronlauge neutralisiert und in Natriumbromid überführt (siehe z.B. Ullmanns Encyclopedia of Industrial Chemistry, Vol. A23, 1993).

Aus US 29 48 709, US 30 18 275 und GB 867 737 ist bekannt, daß die Bromausbeute bei der Bromierung von aus Olefin- und Diolefineinheiten aufgebauten Alkylkautschuken durch die Gegenwart oxidierender Substanzen, insbesondere durch die Gegenwart von Peroxiden, erheblich gesteigert werden kann. Dabei werden jedoch Sauerstoff enthaltende funktionelle Gruppen in das Polymerisat eingebaut. Darüberhinaus kommt es meistens auch zu einer Verzweigung dieser Polymerisate. Gemäß GB 867 737 ist eine derartige Modifizierung der Polymeren mit bis zu 2 % Sauerstoffgehalt im Polymeren für einige Anwendungszwecke erwünscht. Für die standardmäßige Verwendung von Butylkautschuk, z.B. für Reifen-Innenlinern, ist der mit den gemäß dem Stand der Technik verwendeten oxidierenden Verbindungen und den entsprechend angewandten Reaktionsbedingungen erfolgende Einbau sauerstoffhaltiger, funktioneller Gruppen, wie z.B. Carbonylgruppen, jedoch nachteilig, da dies die Gasundurchlässigkeit der aus dem Brombutylkautschuk hergestellten Vulkanisate verschlechtert, was natürlich nachteilig für die Verwendung als Reifen-Innenlinern ist.

Überraschenderweise wurde jetzt gefunden, daß in Gegenwart von schwachen Oxidationsmitteln unter bestimmten Reaktionsbedingungen eine Verbesserung der Bromausbeute erhalten wird, ohne daß sauerstoffhaltige, funktionelle Gruppen in das Polymerisat eingebaut werden oder das Polymerisat in anderer Weise modifiziert wird. Die Produkteigenschaften der so hergestellten Brombutylkautschuke sind vergleichbar mit den Produkteigenschaften von nach bekannten Standardverfahren hergestellten Brombutylkautschuken.

Gegenstand der vorliegenden Erfindung ist daher ein Verfahren zur Bromierung von C₄-C₁₆-Alkylkautschuken, das dadurch gekennzeichnet ist, daß man die Alkylkautschuke in Gegenwart organischer Azoverbindungen und/oder Alkali- und/oder Erdalkalihypochloriten sowie in Gegenwart von linearen, verzweigten und/oder cyclischen Alkanen und Wasser bei Temperaturen von 10 bis 100°C, gegebenenfalls unter Druck, mit Brom umsetzt, wobei die Menge an Brom die 0,2- bis 1,2-fache molare Menge an in Kautschuk enthaltenden Doppelbindungen beträgt, man die 0,1- bis 3-fache molare Menge an Hypochlorit und/oder Azoverbindung, bezogen auf die eingesetzte Menge an Brom, einsetzt, mit der Maßgabe, daß die Konzentration der Hypochlorite in wäßriger Lösung 2 bis 20 Gew.-% beträgt, und wobei man 5 bis 20 Gew.-% Wasser, 60 bis 90 Gew.-% an Alkanen und 5 bis 25 Gew.-% Alkylkautschuk, bezogen auf 100 Gew.-% der Summe an Alkylkautschuk, Alkanen und Wasser, einsetzt.

Das erfindungsgemäße Verfahren wird bevorzugt bei Temperaturen von 20 bis 80°C und bei Drücken von 0,8 bis 10 bar durchgeführt.

Der eingesetzte Alkylkautschuk ist aus Olefin- oder Isoolefineinheiten mit 4 bis 16 Kohlenstoffatomen und konjugierten Diolefineinheiten mit 4 bis 16 Kohlenstoffatomen oder anderen kationisch copolymerisierbaren, ein- oder mehrfach ungesättigten organischen Verbindungen mit 4 bis 16 Kohlenstoffatomen aufgebaut.

Als Isoolefine mit 4 bis 16, bevorzugt 4 bis 12 Kohlenstoffatomen, können zum Aufbau verwendet werden: Isobuten, 2-Methylbuten, 3-Methylbuten-1 und 4-Methylpenten-1, bevorzugt Isobuten und 2-Methylbuten, besonders bevorzugt Isobuten.

Als konjugierte Diolefine mit 4 bis 16 Kohlenstoffatomen können verwendet werden: Butadien, Isopren, Piperylen, 2,3-Dimethylbutadien, 2,4-Dimethylpentadien-1,3, Cyclopentadien, Methylcyclopentadien und 1,3-Cyclohexadien, bevorzugt Butadien, Isopren, Piperylen und 2,3-Dimethylbutadien, besonders bevorzugt Isopren.

Als kationisch polymerisierbare, ein- oder mehrfach ungesättigte organische Verbindungen mit 4 bis 16 Kohlenstoffatomen, bevorzugt 4 bis 10 Kohlenstoffatomen, können zum Aufbau der Alkylkautschuke dienen: Styrol, p-Methylstyrol, Divinylbenzol und Dimethylfulven, bevorzugt Styrol, p-Methylstyrol und Divinylbenzol, insbesondere p-Methylstyrol und Divinylbenzol.

Das Brom wird in flüssiger Form bevorzugt in der 0,3- bis 0,9-fachen molaren Menge, bezogen auf die im Kautschuk enthaltenden Doppelbindungen, eingesetzt.

Als Alkane kommen bevorzugt solche mit 4 bis 12 Kohlenstoffatomen, besonders bevorzugt 5 bis 9 Kohlenstoffatomen in Betracht. Als Beispiele werden genannt: Pentane, Hexane, Cyclohexan und Heptane, ganz besonders bevorzugt Isohexan und n-Hexan. Die Menge an eingesetzten Alkanen beträgt bevorzugt 60 bis 85 Gew.-%, bezogen auf die Summe an Alkylkautschuk, Alkanen und Wasser.

Bei dem erfindungsgemäßen Verfahren setzt man bevorzugt 5 bis 15 Gew.-% an Wasser ein, ebenfalls bezogen auf die Summe an Alkylkautschuk, Alkanen und Wasser. Die zur Bromierung eingesetzte Menge an Alkylkautschuk beträgt bevorzugt 10 bis 20 Gew.-%, bezogen auf die Summe an Alkylkautschuk, Alkanen und Wasser. Hierbei ist zu bemerken, daß sich die eingesetzte Menge an Alkanen, Wasser und an Alkylkautschuk zu 100 Gew.-% ergänzt.

Als organische Azoverbindungen kommen für das erfindungsgemäße Verfahren in Frage: Azodiisobutyronitril, Azodimethylvaleronitril oder andere, nicht färbende organische Azoverbindungen, insbesondere Azodiisobutyronitril.

Als Alkali- oder Erdalkalihypochlorite werden z.B. eingesetzt: Natriumhypochlorit, Kaliumhypochlorit oder Magnesiumhypochlorit, insbesondere Natriumhypochlorit. Die Hypochlorite und die Azoverbindungen können sowohl einzeln als auch im Gemisch untereinander eingesetzt werden. Besonders bevorzugt werden in das erfindungsgemäße Verfahren die Alkali- und/oder Erdalkalihypochlorite eingesetzt.

Die organischen Azoverbindungen und/oder die Alkali- oder Erdalkalihypochlorite werden bevorzugt in der 0,4- bis 0,9-fachen molaren Menge, bezogen auf die Menge eingesetzten Broms, eingesetzt.

Für das erfindungsgemäße Verfahren ist es von besonderer Bedeutung, daß die Alkali- und/oder Erdalkalihypochlorite eine bestimmte Konzentration in der wäßrigen Lösung nicht übersteigen. Bevorzugt ist daher eine Konzentration an Alkali- und/oder Erdalkalihypochloriten in Wasser von 5 bis 15 Gew.-%.

Das erfindungsgemäße Verfahren kann sowohl in kontinuierlicher als auch in diskontinuierlicher Fahrweise durchgeführt werden.

Die Aufarbeitung der erhaltenen bromierten Alkylkautschuke erfolgt in der üblichen Art und Weise, z.B. durch Ausfällen der Polymerisate in Methanol oder Wasser (neutral bis alkalisch) oder durch Strippen des Polymerslurrys, d.h. Koagulation der Polymerteilchen mit Wasserdampf und Koagulationshilfsmittel. Die im Produkt verbleibenden Restmonomeren werden durch Ausdampfen entfernt. Anschließend wird der bromierte Alkylkautschuk von der wäßrigen Phase mechanisch abgetrennt und getrocknet.

Im allgemeinen wird das erfindungsgemäße Verfahren wie folgt durchgeführt: Zu einer Lösung von Alkylkautschuk in geringe Wassermengen enthaltendes Hexan werden unter Lichtausschluß und Stickstoff bei 40 bis 60°C die angegebene Brommenge und die angegebene Menge an Hypochlorit und/oder Azoverbindung unter kräftigem Rühren gegeben. Diese Lösung wird anschließend intensiv bis zu fünf Minuten gerührt und sofort anschließend in mit Natronlauge auf pH 9,5 eingestelltem Wasser ausgefällt. Danach erfolgt die Aufarbeitung in der vorstehend beschriebenen Weise.

Der nach dem erfindungsgemäßen Verfahren erhaltene Bromalkylkautschuk weist gegenüber dem eingesetzten Alkylkautschuk keine Änderung der Molmasse der Polymereinheit, des Verzweigungsgrades oder der Lösungsviskosität auf; ebenso findet kein Einbau sauerstoff- oder stickstoffhaltiger, funktioneller Gruppen statt.

Die nachfolgenden Beispiele sollen das erfindungsgemäße Verfahren verdeutlichen. Durch die Vergleichsbeispiele werden die Vorteile des erfindungsgemäßen Verfahrens gegenüber den Verfahren des Standes der Technik aufgezeigt.

### Beispiele

### Vergleichsbeispiel 1

Zu 150 g einer Lösung aus 22,5 g Butylkautschuk, 112,5 g Hexan und 15 g destilliertem Wasser wurden unter Lichtausschluß und unter Stickstoff bei 45°C 0,27 g Brom und 0,39 g Wasserstoffperoxid in 30 %iger wäßriger Lösung unter kräftigem Rühren zugesetzt. Die Lösung wurde 5 Minuten bei 45°C intensiv gerührt. Sofort danach wurde der bromierte Butylkautschuk in 500 ml mit NaOH auf pH 9,5 eingestelltem destilliertem Wasser ausgefällt. Das ausgefällte Polymere wurde zweimal mit je 500 ml destilliertem Wasser gewaschen und im Vakuumtrockenschrank bei 70°C getrocknet. Die Bromausbeute wurde mittels IR- und NMR-Messungen sowie dem Bromidgehalt im Abwasser bestimmt. Durch Zusatz des Wasserstoffperoxids erhielt man eine Verbesserung der Bromausbeute um 37 % gegenüber der Bromierung ohne Wasserstoffperoxidzusatz. Allerdings fand man Carbonylfunktionen im Brombutylkautschuk und eine Zunahme der Polymerverzweigung von 4 auf 15 % (Anstieg der relativen Lösungsviskosität von 135 ml/g auf 154 ml/g).

### Vergleichsbeispiel 2

Vergleichsbeispiel 1 wurde wiederholt mit 0,06 g Wasserstoffperoxid in 5 %iger wäßriger Lösung. Die Verbesserung der Bromausbeute gegenüber der Bromierung ohne Wasserstoffperoxidzusatz betrug 17 %. Es wurden wieder Carbonylfunktionen im Brombutylkautschuk gefunden, allerdings keine Veränderung der Polymerverzweigung.

### Vergleichsbeispiel 3

Vergleichsbeispiel 1 wurde wiederholt mit 0,13 g NaOCl in 25 %iger wäßriger Lösung. Es wurde eine 30 %ige Steigerung der Bromausbeute gegenüber der Reaktion ohne NaOCl-Zusatz gefunden. Auch hier wurden Carbonylfunktionen, wenn auch in geringerem Maße im IR-Spektrum gefunden. Die relative Lösungsviskosität war von 135 ml/g auf 145 ml/g angestiegen.

### Beispiel 1

Zu 150 g einer Lösung aus 22,5 g Butylkautschuk, 112,5 g Hexan und 15 g destilliertem Wasser wurden unter Lichtausschluß und unter Stickstoff bei 45°C 0,67 g Brom und 0,1 g Azodiisobutyronitril unter kräftigem Rühren zugesetzt. Die Lösung wurde 5 Minuten bei 45°C intensiv gerührt. Sofort danach wurde der bromierte Butylkautschuk in 500 ml mit NaOH auf pH 9,5 eingestelltem destilliertem Wasser ausgefällt. Das ausgefällte Polymere wurde zweimal mit je 500 ml destilliertem Wasser gewaschen und im Vakuumtrockenschrank bei 70°C getrocknet. Die Bromausbeute wurde mittels IR- und NMR-Messungen sowie dem Bromidgehalt im Abwasser bestimmt. Durch Zusatz des Azodiisobutyronitrils erhielt man eine Verbesserung der Bromausbeute um 41 % gegenüber der Bromierung ohne Azodiisobutyronitrilzusatz. Es wurden keine sauerstoffhaltigen, funktionellen Gruppen im Brombutylkautschuk gefunden und die relative Lösungsviskosität blieb bei 135 ml/g.

### Beispiel 2

Beispiel 1 wurde wiederholt mit 0,27 g Brom und 0,56 g Azodiisobutyronitril bei 55°C. Die Verbesserung der Bromausbeute betrug 63 %. Es wurden keine Carbonylfunktionen oder sonstigen sauerstoffhaltigen funktionellen Gruppen im Brombutylkautschuk gefunden und die relative Lösungsviskosität blieb wiederum bei 135 ml/g.

### Beispiel 3

Beispiel 1 wurde wiederholt mit 0,27 g Brom und 0,13 g NaOCl in 5 %iger wäßriger Lösung. Die Verbesserung der Bromausbeute betrug 58 % nach NMR- und IR-Messungen und es wurden keine Carbonylfunktionen oder sonstigen sauerstoffhaltigen funktionellen Gruppen im Brombutylkautschuk gefunden. Die relative Lösungsviskosität blieb praktisch unverändert und betrug nach der Bromierung 136 ml/g.

### Beispiel 4

Beispiel 1 wurde wiederholt mit 0,40 g Brom und 0,3 g NaOCI in 10 %iger wäßriger Lösung. Die Verbesserung der Bromausbeute betrug 79 %. Es wurden keine Carbonylfunktionen oder sonstigen, sauerstoffhaltigen funktionellen Gruppen im Brombutylkautschuk gefunden. Die relative Lösungsviskosität blieb unverändert bei 135 ml/g und bei der Gelpermeationschromatographie wurden keine Unterschiede der Molmassenverteilung vor und nach der Bromierung festgestellt.

## Patentansprüche

1. Verfahren zur Bromierung von C₄-C₁₆-Alkylkautschuken, dadurch gekennzeichnet, daß man die Alkylkautschuke in Gegenwart organischer Azoverbindungen und/oder Alkali- und/oder Erdalkalihypochloriten sowie in Gegenwart von linearen, verzweigten und/oder cyclischen Alkanen und Wasser bei Temperaturen von 10 bis 100°C, gegebenenfalls unter Druck, mit Brom umsetzt, wobei die Menge an Brom die 0,2- bis 1,2-fache molare Menge an im Kautschuk enthaltenen Doppelbindungen beträgt, man die 0,1- bis 3-fache molare Menge an Hypochlorit und/oder Azoverbindung, bezogen auf die eingesetzte Menge an Brom, einsetzt, mit der Maßgabe, daß die Konzentration der Hypochlorite in wäßriger Lösung 2 bis 20 Gew.-% beträgt, und wobei man 5 bis 20 Gew.-% Wasser, 60 bis 90 Gew.-% an Alkanen und 5 bis 25 Gew.-% Alkylkautschuk, bezogen auf 100 Gew.-% der Summe an Alkylkautschuk, Alkanen und Wasser, einsetzt.

2. Verfahren nach Anspruch 1, dadurch gekennzeichnet, daß man in Gegenwart von Natriumhypochlorit, Kaliumhypochlorit und/oder Magnesiumhypochlorit arbeitet.

3. Verfahren nach Ansprüchen 1 und 2, dadurch gekennzeichnet, daß man in Gegenwart von Azodiisobutyronitril arbeitet.

4. Verfahren nach Ansprüchen 1 bis 3, dadurch gekennzeichnet, daß man in Gegenwart von Pentanen, Hexanen, Cyclohexanen und/oder Heptanen arbeitet.

5. Verfahren nach Ansprüchen 1 bis 4, dadurch gekennzeichnet, daß man bei Drücken von 0,8 bis 10 bar arbeitet.

## Claims

1. Process for the bromination of C₄-C₁₆ alkyl rubbers, characterised in that the alkyl rubbers are reacted with bromine in the presence of organic azo compounds and/or alkali metal and/or alkaline earth metal hypochlorites and in the presence of linear, branched and/or cyclic alkanes and water at temperatures of 10 to 100°C, optionally under pressure, wherein the quantity of bromine is 0.2 to 1.2 times the molar quantity of double bonds contained in the rubber, 0.1 to 3 times the molar quantity of hypochlorite and/or azo compound is used relative to the quantity of bromine used, providing that the concentration of the hypochlorites in an aqueous solution is 2 to 20 wt.%, and wherein 5 to 20 wt.% of water, 60 to 90 wt.% of alkanes and 5 to 25 wt.% of alkyl rubber are used relative to 100 wt.% of the total of alkyl rubber, alkanes and water.

2. Process according to claim 1, characterised in that it is performed in the presence of sodium hypochlorite, potassium hypochlorite and/or magnesium hypochlorite.

3. Process according to claims 1 and 2, characterised in that it is performed in the presence of azodiisobutyronitrile.

4. Process according to claims 1 to 3, characterised in that it is performed in the presence of pentanes, hexanes, cyclohexanes and/or heptanes.

5. Process according to claims 1 to 4, characterised in that it is performed at pressures of 0.8 to 10 bar.

## Revendications

1. Procédé pour la bromation de caoutchoucs alkyle en C₄-C₁₆, caractérisé en ce qu'on fait réagir avec du brome les caoutchoucs alkyle en présence de composés organoazoïques et/ou d'hypochlorites de métaux alcalins et/ou alcalino-terreux, ainsi qu'en présence d'alcanes linéaires , ramifiés et/ou cycliques, et d'eau, à des températures de 10 à 100°C, éventuellement sous pression, dans lequel la quantité de brome représente une quantité de 0,2 à 1,2 fois molaire des liaisons doubles contenues dans le caoutchouc, on met en oeuvre une quantité de 0,1 à 3 fois molaire d'hypochlorite et/ou de composé azoïque rapportée à la quantité de brome mise en oeuvre, avec cette mesure que la concentration des hypochlorites en solution aqueuse s'élève de 2 à 20% en poids, et dans lequel on met en oeuvre de l'eau à concurrence de 5 à 20% en poids, des alcanes à concurrence de 60 à 90% en poids et du caoutchouc alkyle à concurrence de 5 à 25% en poids rapportés à 100% en poids de la somme du caoutchouc alkyle, des alcanes et de l'eau.

2. Procédé selon la revendication 1, caractérisé en ce qu'on travaille en présence d'hypochlorite de sodium, d'hypochlorite de potassium et/ou d'hypochlorite de magnésium.

3. Procédé selon les revendications 1 et 2, caractérisé en ce qu'on travaille en présence d'azodiisobutyronitrile.

4. Procédé selon les revendications 1 à 3, caractérisé en ce qu'on travaille en présence de pentanes, d'hexanes, de cyclohexanes et/ou d'heptanes.

5. Procédé selon les revendications 1 à 4, caractérisé en ce qu'on travaille sous des pressions de 0,8 à 10 bar.
